# EUROPEAN PATENT APPLICATION

(11) **EP 4 140 834 A1**
(43) Date of publication of application: **01.03.2023**
(21) Application number: 21192962.5
(22) Date of filing: 25.08.2021
(51) Int. Cl.: B60S 1/34, B60S 1/04

(54) **ROLLER MODULE FOR A WIPER ARRANGEMENT**

(71) Applicant: Valeo Autosystemy SP. Z.O.O., 32-050 Skawina (PL)
(72) Inventor: JABLECKI, Sebastian, 78320 La Verrière (FR); PURZ, Matthias, 78320 La verrière (FR)
(74) Representative: Valeo Visibility

(57) **Abstract**

The invention relates to a roller module (14) for a wiper arm assembly comprising a roller element. The roller module (14) also comprises :
- a retaining pin (20) comprising a head and a pin connection end, and
- a support shaft (18) connected, at a roller end, to the roller element and, at an opposite support shaft connection end, to pin connection end.
The retaining pin (20) and the support shaft (18) are configured to be assembled to one another such that an assembly gap is formed between the pin head and the support shaft connection end when assembled.

## Description

The invention relates to a connection between a roller and a wiper arm device for cleaning a vehicle window, in particular a windshield.

Some vehicles, in particular commercial vehicles, comprise spherically curved vehicle windows, such as windshields. To achieve satisfactory window wiping results, it is necessary for the wiper blade to sweep over the vehicle window up to the lateral sides of said window. However, owing to its curved shaped, there is a risk that the wiper arm hits the glass during this process. Hence, it is known from the prior art, notably from document EP3501917 A1, to equip the arm with a spacer element holding the wiper arm at a constant spacing from the vehicle window.

Moreover, to minimize the wear between the spacer device and the vehicle window whilst limiting the friction between the spacer element and the vehicle window, the spacer element includes a rotatably mounted roller element abutting against the vehicle window and rolling on the vehicle window during the movement of the wiper arm rod.

During the lifetime of the wiper, the need to replace the roller will arise. For commercial vehicles in particular, there is a strong incentive to be able do so in a short amount of time, so as to minimize downtime. In addition, said replacement should ideally be simple enough for a driver to proceed with the replacement themselves, away from maintenance facilities, for example using a simple toolkit.

The invention intends to solve the afore-mentioned problem by providing a roller module that may be connected to the wiper in a simple and quick manner.

The invention therefore relates to a roller module for a wiper arm assembly comprising a roller element,
**characterized in that** it also comprises :
- a retaining pin comprising a head and a pin connection end, and
- a support shaft connected, at a roller end, to the roller element and, at an opposite support shaft connection end, to the pin connection end,
the retaining pin and the support shaft being configured to be assembled to one another such that an assembly gap is formed between the pin head and the support shaft connection end when assembled.

Owing to the fact that the roller element is inserted in a module that is divided into a retaining pin and a support shaft, which may be assembled and fitted to one another such that a gap is formed between the pin head and the shaft, it is possible to sandwich a surface of a wiper arm between the head of the retaining pin and the support shaft to provide an easy and secure fastening of the roller element to the wiper arm.

Preferably, in order to assemble the support shaft and the retaining pin together in a quick and easy manner, the retaining pin for example comprises a connection tab at the pin connection end, and the support shaft connection end comprises a connection notch of a shape corresponding to the shape of said connection tab, the retaining pin and the support shaft being assembled to one another via an engagement of the connection tab in the connection notch.

To further simplify the connection between the retaining pin and the support shaft, the connection notch for example has the shape of an arc of a circle and the engagement of the connection tab in the connection notch is obtained by a rotational movement of either the retaining pin and/or the support shaft.

According to a particular embodiment of the invention, for example, the support shaft connection end comprises a hollow skirt in which the pin connection end can be inserted, the connection notch being formed of a hollowed-out section of an internal surface of said hollow skirt.

So as to prevent the connection tab from being pulled out when engaged in the connection notch, the hollow skirt comprises a locking ledge overhanging the connection tab in position.

In order to facilitate to connexion between the support shaft and the wiper arm, for example, the hollow skirt comprises at least one locking lug projecting from an external surface of said hollow skirt.

So as to avoid a rotation of the roller module once connected to the wiper arm, for example, the hollow skirt comprises two locking lugs of different shapes.

According to a particular embodiment of the invention, for example, the retaining pin and the support shaft are symmetrical around a longitudinal axis, and wherein, when assembled, their axes are aligned.

In order to centre the retaining pin onto the support shaft, but also to transmit a portion of the forces to which the wiper arm is subjected to the roller and vice-versa, the support shaft for example comprises a centring pin aligned along the longitudinal axis of the support shaft and the retaining pin comprising a central canal, configured such that when assembled, the centring pin is inserted in the central canal.

So as to protect the wheel of the roller from the environment, the support shaft for example includes, at its roller end, a roller guard.

Preferably, to provide a better wiping effect, the shaft roller end for example also comprises wiper blades.

The invention is also directed to a wiper assembly comprising a wiper arm assembly for cleaning a vehicle window **characterized in that** it comprises a roller module according to any one of the preceding claims.

To ensure a simple connection between the wiper arm and the roller module, the wiper arm comprises an assembling surface including a cut-out of a shape corresponding to the connection end of the retaining pin.

To ensure a secure connection between the wiper arm and the roller module, the roller module is attached to the wiper arm by inserting the connection end of the retaining pin in the cut-out and wherein when the retaining pin and the support shaft are assembled, the assembling surface is contained within the assembly gap.

To further ensure a secure between the wiper arm and the roller module, the wiper arm comprises an assembling surface including a cut-out of a shape corresponding to the locking lugs.

### BRIEF DESCRIPTION OF THE FIGURES

The invention will be better understood in view of the following description, referring to the annexed Figures in which:
- Figure 1 is a view in perspective of parts of a wiper assembly according to a particular embodiment of the invention;
- Figure 2 is a view in perspective of the roller module of Figure 1;
- Figure 3 is a view in perspective of the retaining pin of the roller module of Figure 2;
- Figure 4 is a view in perspective of the support shaft of the roller module of Figure 2;
- Figure 5 is a sectional view along plane IV-IV of the roller module of Figure 2; and
- Figure 6 is a top view of the wiper arm of the wiper assembly of Figure 1.

### DETAILED DESCRIPTION

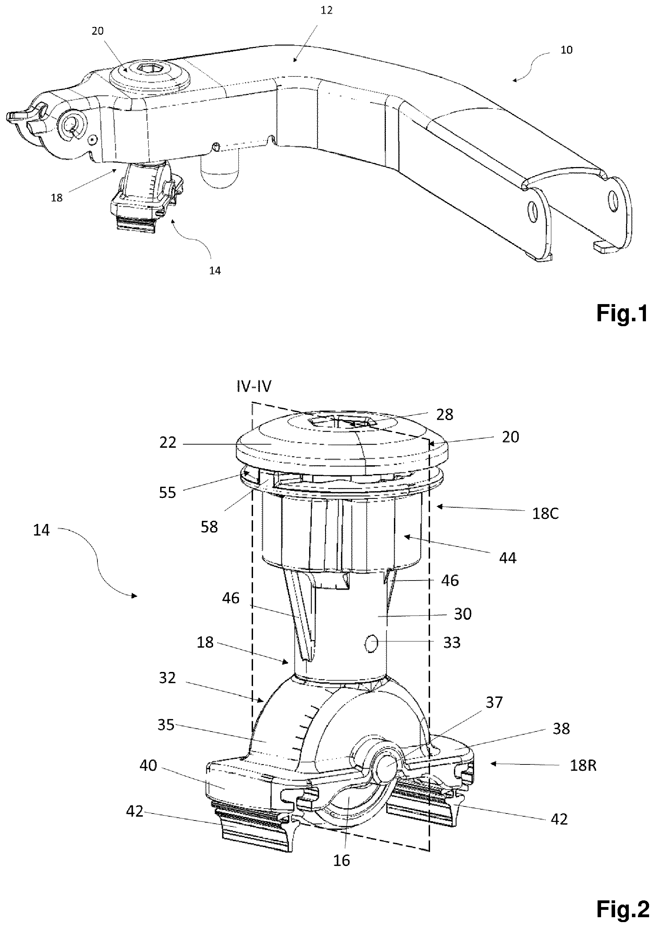

A wiper assembly 10 according a particular embodiment of the invention has been shown on Figure 1. The wiper assembly 10 shown on the figures is intended to clean a vehicle window, in particular a spherically curved vehicle window such as the windshield of a commercial vehicle like a truck.

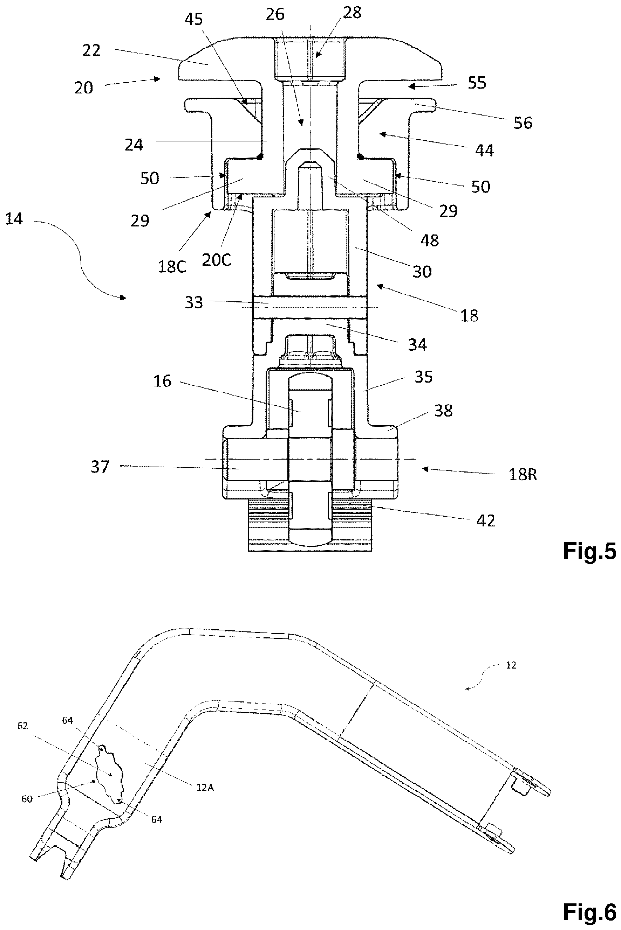

The wiper assembly 10 comprises a wiper arm 12, of which only a part of is shown on Figures 1 and 5. The rest of the wiper arm 12 may be a wiper arm 12 known in itself from a person skilled in the art and will therefore not be described further in the present document.

The wiper assembly 10 also comprises a roller module 14 which is shown on Figure 2. The roller module 14 comprises a roller element 16, here a wheel which is preferably made out of elastomer or rubber to prevent any damage on the windshield when rolling. However, the roller element 16 could be of another nature, such as a ball.

The wheel 16 is connected at one end of a support shaft 18, or shaft roller end 18R, which itself is connected to a retaining pin 20. To be more precise, the retaining pin 20 comprises a pin head 22 and a pin connection end 20C to which an end of the support shaft opposite the shaft roller end, or support shaft end 18C, is connected.

As will be explained later, both retaining pin 20 and support shaft 17 are symmetrical around a longitudinal axis. When assembled, their axes are aligned.

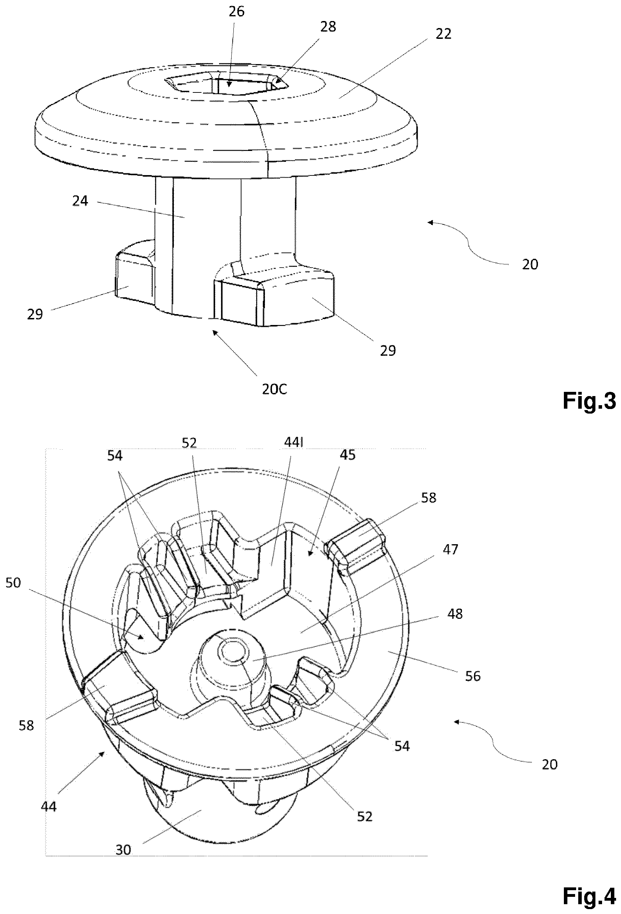

Turning to Figure 3, the retaining pin 20 will now be described in further detail. The pin head 22 has an overall rounded disk shape, close to a regular pin or screw head shape.

The retaining pin 20 also comprises a pin body 24 is formed of a hollow tube comprising a central canal 26 extending along the longitudinal axis of the tube from one side of the pin body 24 to another. More particularly, the central canal 26 extends through the pin head 22 such that the pin head 22 comprises a central opening 28. The central canal 26 is delimited by a surface the transversal section of which has the shape of a hexagon, but other shapes could be considered such as a circle. The purpose of the central canal 26 is not only to save materials and weight, but will also help centering the retaining pin 20 when connecting the retaining pin 20 and the support shaft 18 as will be explained later.

The retaining pin 20 also comprises at the pin connection end two connection tabs 29, which are here placed symmetrically around the pin body 24 : here, they are distant by a 180° angle around the pin body 24. The connection tabs 29 extend from the pin body 24 along an axis that is perpendicular to the longitudinal axis of the pin body 24. In this particular embodiment, the connection tabs 29 have a parallelepipedal shape, but other shapes could be considered. The connection tabs 29 are identical.

Turning now to Figure 4, the support shaft 18 will now be described in further detail. The support shaft comprises a shaft body 30 in the shape of tube, which is preferably comprises hollow sections to save materials and weight as can be seen on Figure 5, aligned along a longitudinal axis. As will be explained later and as shown on Figures 2 and 5, once assembled, the longitudinal axes of the retaining pin 20 and the support shaft 18 coincide.

Connected to the end of the shaft body 30 that is opposite to the shaft connection end 18C, support shaft 30 includes a roller guard 32.

Roller guard 32 comprises a top part 34, having the shape of a solid of revolution the transverse section of which is dimensioned such that it may be inserted inside shaft body 30 as can be seen on Figure 5. Here, the transverse section of top part 34 is hexagonal in shape to avoid adverse rotation of top part 34 inside shaft body 30. Moreover, top part 34 is preferably hollow to save materials and weight.

Top part 34 of roller guard 32 allows its connection to shaft body 30, for example via a coupling pin 33 that is inserted in corresponding holes made through the first section of roller guard 32 and shaft body 30, as can be seen on Figure 5. However, according to a variant (not shown on the Figures), shaft body 20 and roller guard 32 may be made from one piece.

Roller guard 32 comprises a bottom part 35 matching the shape of the wheel 16 to protect its upper half by comprising two semi-discs joined by a joining surface. In addition, roller guard 32 connects wheel 16 to support shaft 18 through an axle opening 36, into which an axle 37 of the wheel 16 is inserted. Axle 37 may be for example maintained inside the roller guard 32 using a locking ring mounted on axle 37 (not shown on the Figures). It should be noted that the shape of roller guard 32 can vary, especially if the roller element is a ball instead of a wheel 16.

Roller guard 32 also comprises, at its end opposite the shaft body 30, a flange 38 bordering roller guard 32. Flange 38 is planar and extends along a plane that is normal to the longitudinal axis of the shaft body 30. Flange 38 includes a rim 40 extending along the longitudinal axis of the shaft body 30 to further protect the wheel 32.

Moreover, as can be seen on Figure 2, roller end 18R of the support shaft comprises wiper blades 42. Here, wiper blades 42 extend from rim 40 of flange 38 of roller guard 32. Wiper blades 42 are typically made from rubber or elastomer. Their length is chosen such that they come into contact with the windshield whilst roller module 14 rolls, to further enhance the wiping efficiency of wiper arm assembly 10. It should be noted that wiper blades 42 are optional.

At its end opposite the shaft roller end 18R, i.e. at shaft connection end 18C, support shaft 18 comprises a hollow skirt 44, visible on Figures 2, 4 and 5. To be more precise, in the present embodiment skirt 44 forms the end of shaft body 30. Hollow skirt 44 is open at shaft connection end 18 and is accessible through an insertion opening 45 in which the pin connection end 20C can be inserted when assembling retaining pin 20 to support shaft 18.

Hollow skirt 44 is in the present case an extension of shaft body 30 and has the shape of a cylinder, the diameter of which is larger than the one of shaft body 30, projecting from a circular base 47 forming a bottom of hollow skirt 44 as well as an extension of shaft body 30. In the present embodiment, optionally, shaft body 30 comprises reinforcement webs 46 linking the external surface of shaft body 30 to circular base 47 of hollow skirt 44.

Hollow skirt 44 preferably includes a centring pin 48, projecting from circular base 47 towards the insertion opening 45 along the longitudinal axis of the support shaft 18. Centring pin 48 here has the shape of a cylinder, the dimensions of which are smaller than central canal 26 of the retaining pin, to allow insertion of centring pin 48 inside central canal 26 when connecting retaining pin 20 to support shaft 18. Specifically, centring pin 48 helps inserting and centring retaining pin 20 inside support shaft 18.

The support shaft connection end 20C comprises two connection notches 50 of a shape corresponding to the shape of the connection tabs 29 such that retaining pin 20 and support shaft 18 can be assembled to one another via an engagement of the connection tabs 29 in the connection notches 50, as can be seen on Figure 5.

To be more precise, in the embodiment as shown on the Figures, connection notches 50 are formed of hollowed-out section of an internal surface 441 of hollow skirt 44.

The connection notches 50 have the shape of an arc of a circle and the engagement of connection tabs 29 in connection notches 50 is obtained by a rotational movement of either the retaining pin 20 and/or the support shaft 18. In the embodiment as shown on the Figures, the required rotation to obtain the locking of the retaining pin 20 into place is 90°. However, this angle may vary and could be smaller.

Hollow skirt 44 also comprises two locking ledges 52 overhanging each of connection notches 50, so as to prevent the connection tabs 29 from being pulled out when engaged in connection notches 50.

Preferably, as can be seen on Figure 4, the locking ledges 52 include reinforcement ribs 54 extending perpendicularly from each of the locking ledges 52, i.e. along the longitudinal axis of the support shaft 18. In the particular example shown on the Figures, each locking ledge 52 includes two reinforcement ribs 54, but this number can vary depending on the material, size and forces the roller module 14 is subjected to.

As can be seen on Figures 2 and 5, retaining pin 20 and support shaft 18 are configured to be assembled to one another such that an assembly gap 55 is formed between pin head 22 and support shaft connection end 18C when assembled. To achieve this, in the present embodiment, the length of pin body 24 is adjusted to the depth of insertion opening 45 of skirt 44.

Hollow skirt 44 also comprises an outer rim 56, here of an annular shape, from which at least one locking lug 58 projects. To be more precise, outer rim 56 comprises two locking lugs 58 of different shapes, which are placed symmetrically around the longitudinal axis, i.e. in the present embodiment distanced by an angle of 180° on outer rim 56. This is to avoid a rotation of the roller module 14 once connected to the wiper arm 12 as will now be explained in relation to Figures 1 and 6.

Turning now to Figure 6, wiper arm 12 comprises an assembling surface 12A, which is preferably planar, including a cut-out 60 corresponding to the connection end 20C of the retaining pin.

To be more precise, cut-out 60 comprises a central hole 62 the contour of which corresponds to the transverse section of connection end 20C of the retaining pin, i.e. taking into account the transverse section of pin body 24 and connection tabs 29. This allows a simple insertion of retaining pin 20 inside cut-out 60.

Roller module 14 is attached to wiper arm 12 by inserting pin connection end 20C in the cut-out 60. When retaining pin 20 and support shaft 18 are assembled, assembling surface 12A is contained within assembly gap 55. In other words, assembling surface 12A is sandwiched between retaining pin 20 and support shaft 18. According to the present embodiment, assembling surface 12A is to be more precise sandwiched between pin head 22 and outer rim 56 of hollow skirt 44 of support shaft 18.

In the present embodiment, cut-out 60 also includes a shape corresponding to the locking lugs 58 which are projecting from outer rim 56. Here cut-out 60 comprises, extending from central hole 62, external holes 64 of a shape corresponding to the locking lugs 58. Considering the fact that in the example as shown on the Figures, the locking lugs 58 differ from one another, external holes 64 match these shapes and thus also differ from one another. This avoids rotation of the roller module 14 when assembled to the wiper arm 12.

Thus one clearly understands that thanks to the roller element being inserted in a module that is divided into a retaining pin and the support shaft, which may be assembled and fitted to one another such that a gap is formed between the pin head and the shaft, it is possible to sandwich a surface of a wiper arm between the head of the retaining pin and the support shaft to provide an easy and secure fastening of the roller element to the wiper arm.

Naturally, other embodiments or variants of the invention will appear to a skilled person in the art.

### List of references

- 10 :: Wiper arm assembly
- 12 :: Wiper arm
- 12A :: Assembling surface of the wiper arm
- 14 :: Roller module
- 16 :: Roller element (wheel)
- 18 :: Support shaft
- 18C :: Connection end of the support shaft
- 18R :: Roller end of the support shaft
- 20 :: Retaining pin
- 20C :: Connection end of the retaining pin
- 22 :: Pin head
- 24 :: Pin body
- 26 :: Central canal of the retaining pin
- 28 :: Central opening of the retaining pin
- 29 :: Connection tabs of the retaining pin
- 30 :: Shaft body
- 32 :: Roller guard
- 33 :: Coupling pin
- 34 :: Top part of the roller guard
- 35 :: Bottom part of the roller guard
- 36 :: Axle opening of the roller guard
- 37 :: Axle of the wheel
- 38 :: Flange of the roller guard
- 40 :: Rim of the flange
- 42 :: Wiper blades
- 44 :: Hollow skirt of the shaft
- 44I :: Internal surface of the skirt
- 45 :: Insertion opening of the skirt
- 46 :: Reinforcement webs
- 47 :: Circular base of the skirt
- 48 :: Centering pin
- 50 :: Connection notches
- 52 :: Locking ledges
- 54 :: Ledge reinforcement ribs
- 56 :: Outer rim of the skirt
- 58 :: Locking lugs
- 60 :: Assembling surface cut-out
- 62 :: Central hole of the cut-out
- 64 :: External holes of the cut-out

## Claims

1. A roller module (14) for a wiper arm (12) assembly comprising a roller element (16),
**characterized in that** it also comprises :
- a retaining pin (20) comprising a head (22) and a pin connection end (20C), and
- a support shaft (18) connected, at a roller end, to the roller element (16) and, at an opposite support shaft connection end (18C), to pin connection end (20C),
the retaining pin (20) and the support shaft (18) being configured to be assembled to one another such that an assembly gap (55) is formed between the pin head (22) and the support shaft connection end (18C) when assembled.

2. A roller module (14) according to claim 1, wherein the retaining pin (20) comprises a connection tab (29) at the pin connection end (20C) and the support shaft connection end (18C) comprises a connection notch (50) of a shape corresponding to the shape of said connection tab (29), the retaining pin (20) and the support shaft (18) being assembled to one another via an engagement of the connection tab (29) in the connection notch (50).

3. A roller module (14) according to claim 2, wherein the connection notch (50) has the shape of an arc of a circle and the engagement of the connection tab (29) in the connection notch (50) is obtained by a rotational movement of either the retaining pin (20) and/or the support shaft (18).

4. A roller module (14) according to any one of the preceding claims, wherein the support shaft connection end (18C) comprises a hollow skirt (44) in which the pin connection end (20C) can be inserted, the connection notch (50) being formed of a hollowed-out section of an internal surface (44I) of said hollow skirt (44).

5. A roller module (14) according to claim 4, wherein the hollow skirt (44) comprises a locking ledge (52) overhanging the connection notch (50).

6. A roller module (14) according to either one of claims 4 or 5, wherein the hollow skirt (44) comprises at least one locking lug (58) projecting from an external surface of said skirt (44).

7. A roller module (14) according to claim 6, werein the hollow skirt comprises two locking lugs (58) of different shapes.

8. A roller module (14) according to any one of the preceding claims, wherein the retaining pin (20) and the support shaft (18) are symmetrical around a longitudinal axis, and wherein, when assembled, their axes are aligned.

9. A roller module (14) according to claim 8, wherein the support shaft (18) comprises a centring pin (48) aligned along the longitudinal axis of the support shaft (18) and the retaining pin (20) comprising a central canal (26), configured such that when assembled, the centring pin (20) is inserted in the central canal (26).

10. A roller module (14) according to any one of the preceding claims, wherein the support shaft (18) includes, at its roller end (18R), a roller guard (32).

11. A roller module (14) according to any one of the preceding claims, wherein the shaft roller end (18R) further comprises wiper blades (42).

12. Wiper assembly (10) comprising a wiper arm (12) assembly for cleaning a vehicle window **characterized in that** it comprises a roller module (14) according to any one of the preceding claims.

13. Wiper assembly (10) according to the preceding claim , wherein the wiper arm (12) comprises an assembling surface (12A) including a cut-out (60) of a shape corresponding to the connection end of the retaining pin (20).

14. Wiper assembly (10) according to claim 13, wherein the roller module (14) is attached to the wiper arm (12) by inserting the connection end (20C) of the retaining pin (20) in the cut-out (60) and wherein when the retaining pin (20) and the support shaft (18) are assembled, the assembling surface (12A) is contained within the assembly gap (55).

15. Wiper assembly (10) according to claim 12 taken in combination with claim 6, wherein the wiper arm (12) comprises an assembling surface (12A) including a cut-out (60) of a shape corresponding to the locking lugs (58).
